# EUROPÄISCHE PATENTSCHRIFT

(11) **EP 3 875 164 B1**
(45) Veröffentlichungstag und Bekanntmachung des Hinweises auf die Patenterteilung: **26.07.2023**
(21) Anmeldenummer: 21158479.2
(22) Anmeldetag: 22.02.2021
(51) Int. Cl.: B01D 46/00, B01D 46/12, B01D 46/16, F24F 8/99

(54) **FILTERVORRICHTUNG, LUFTFÜHRUNGSSCHLAUCH MIT FILTERELEMENT, TUNNEL UND VERWENDUNG DER FILTERVORRICHTUNG**
FILTER DEVICE, AIR GUIDE HOSE WITH FILTER ELEMENT, TUNNEL AND USE OF THE FILTER DEVICE
DISPOSITIF FILTRANT, TUYAU DE CONDUIT D'AIR POURVU D'ÉLÉMENT FILTRANT, TUNNEL ET UTILISATION DU DISPOSITIF FILTRANT

(30) Priorität: 04.03.2020 DE 102020105750
(43) Veröffentlichungstag der Anmeldung: 08.09.2021
(73) Patentinhaber: MANN+HUMMEL GmbH, 71636 Ludwigsburg (DE)
(72) Erfinder: SCHULZ, Dr. Christoph, 70569 Stuttgart (DE); WARTH, Dr. Tobias, 71364 Winnenden (DE); HITTINGER, Marc, 72768 Reutlingen (DE); GUSEK, Jens, 74392 Freudental (DE); BAUCH, Maximilian, 74357 Bönnigheim (DE); MÜLLER, Dr. Thilo, 76189 Karlsruhe (DE); KORONAI-BAUER, Anja, 78467 Konstanz (DE); TCHALE, Sylvain Michel, 76137 Karlsruhe (DE); EDER, Roman, 71638 Ludwigsburg (DE)
(74) Vertreter: Mann + Hummel Intellectual Property

(56) Entgegenhaltungen:
- DE-U1-202016 102 373
- FR-A1- 2 787 175
- US-A- 5 632 793
- US-A1- 2015 135 569

## Beschreibung

### Technisches Gebiet

Die Erfindung betrifft eine Filtervorrichtung, insbesondere zur stationären Umgebungsluftfiltration, einen Luftführungsschlauch mit Filterelement, einen Tunnel, insbesondere Fahrzeug- oder Personentunnel, sowie eine Verwendung der Filtervorrichtung.

### Stand der Technik

Weltweit besteht in vielen Ballungszentren das Problem, dass die Umgebungsluft durch Industrieabgase, den Straßenverkehr und private Feuerstätten vor allem bei widrigen Wetterlagen (kein Regen, Inversion, geringe Windgeschwindigkeiten, kein Luftaustausch zwischen Höhenschichten) Grenzwerte für Feinstaub und/oder Gase wie Ozon, NOx, CO um ein Vielfaches überschreiten kann. Maßnahmen, die zu einer Reduktion der Schadstoffkonzentrationen führen, können entweder in der Vermeidung oder Reduzierung von Emissionen und/oder der Abscheidung dieser Schadstoffe aus der Umgebungsluft liegen.

Es ist ein bereits im Stand der Technik dokumentierter Ansatz, stationär montierte Umgebungsluftreiniger zur Abscheidung von Luftschadstoffen einzusetzen. Solche Geräte verfügen in der Regel über ein durchströmbares Gehäuse mit einem Einlass und einem Auslass, in dem jeweils ein oder mehrere Gebläse und ein Filter angeordnet sind, wobei es sich bei den Filtern um klassische Filterelemente aus porösen und für Luft durchlässigen Filtermedien und/oder um Elektroabscheider handeln kann. Die Umgebungsluftreiniger werden vortielhaft an Orten mit erhöhrer Schadstoffkonzentration aufgestellt, etwa im Außenbereich als auch im Innenbereich, Tunneln, unterirdische Bahnhöfen, Bushaltestellen etc.

Derartige Umgebungsluftreiniger sind beispielsweise aus der DE 20 2016 102 373 U1 in Form einer Werbesäule oder FR 27 87 175 A bekannt.

Die dort beschriebenen Umgebungsluftreiniger weisen jedoch den Nachteil auf, dass diese schwer und unflexibel sind und nur unzureichend für einen Einsatz in komplexen, insbesondere gekrümmten und/oder zerklüfteten, Bauräumen geeignet sind.

Ausgehend von diesem Stand der Technik liegt der Erfindung die Aufgabe zugrunde, eine Filtervorrichtung zu schaffen, die sich durch einen leichteren, flexibleren Aufbau sowie eine gute Anpassbarkeit an komplexe, insbesondere gekrümmte und/oder zerklüftete, Bauräume auszeichnet.

Diese Aufgabe wird gelöst durch eine Filtervorrichtung mit den Merkmalen des unabhängigen Patentanspruchs 1 gelöst.

Ferner besteht die Aufgabe, einen Luftführungsschlauch mit Filterelement bereitzustellen, mittels welchem ein Service der erfindungsgemäßen Filtervorrichtung besonders einfach und sauber durchgeführt werden kann.

Diese Aufgabe wird durch einen Luftführungsschlauch mit Filterelement gemäß Anspruch 14 gelöst.

Schließlich besteht die Aufgabe, eine Lösung zur Filtration von Umgebungsluft in einem Tunnel anzugeben, die sich durch eine besonders gute Bauraumausnutzung auszeichnet.

Diese Aufgabe wird durch einen Tunnel gemäß Anspruch 16 sowie durch eine Verwendung der Filtervorrichtung gemäß Anspruch 17 gelöst.

Bevorzugte Weiterbildungen werden durch die jeweiligen abhängigen Ansprüche angegeben.

### Offenbarung der Erfindung

Die erfindungsgemäße Filtervorrichtung ist insbesondere zur stationären Umgebungsluftfiltration vorgesehen und weist ein Gebläsegehäuse auf, das zumindest einen Lufteinlass und zumindest einen Luftauslass aufweist. In dem Gebläsegehäuse ist zumindest eine Vorrichtung zur Erzeugung eines Luftstroms angeordnet, mittels der ein Luftstrom von dem Lufteinlass zu dem Luftauslass erzeugbar ist. Die Filtervorrichtung weist zumindest einen biegeschlaffen Luftführungsschlauch auf, der ein erstes offenes Ende sowie ein zweites geschlossenes Ende hat. Mit dem ersten offenen Ende ist der Luftführungsschlauch mit dem Luftauslass des Gebläsegehäuses verbunden. In dem Luftführungsschlauch ist zwischen dem ersten und dem zweiten Ende zumindest eine Öffnung vorgesehen, an der zumindest ein Filterelement angeordnet ist, das eine Rohseite innerhalb des Luftführungsschlauchs von einer stromabwärts des Filterelements vorliegenden Reinseite trennt. Der Luftführungsschlauch ist in einem Betriebszustand vermittels der Vorrichtung zur Erzeugung des Luftstroms aufblasbar. Das Filterelement kann gemäß einer Ausführungsform in die zumindest eine Öffnung eingesetzt sein.

Der Luftführungsschlauch weist erfindungsgemäß eine geringere Luftdurchlässigkeit auf als das zumindest eine Filterelement. Hierdurch wird erreicht, dass möglichst wenig ungefilterte Luft durch den Luftführungsschlauch entweicht und der Großteil der Luft zur Filtration die Filterelemente passieren muss.

In Ausführungen kann der Luftführungsschlauch nicht luftdurchlässig sein, wobei der Luftführungsschlauch insbesondere ein nicht luftdurchlässiges Material aufweist oder daraus besteht.

Die erfindungsgemäße Bauform der Filtervorrichtung bietet gegenüber bekannten Filtervorrichtungen den Vorteil, dass diese mit einem vergleichsweise geringen Materialeinsatz herstellbar ist, da zur Luftführung keine massiven Bauteile (in der Regel aus Stahlblechen) eingesetzt werden. Die Luftführung wird vielmehr durch den biegeschlaffen Luftführungsschlauch bereitgestellt, was sowohl leicht und flexibel als auch kostengünstig ist. Dies hat den Vorteil, dass sich die erfindungsgemäße Vorrichtung besonders gut und flexibel an beliebige Bauräume anpassen lässt, einfach durch eine entsprechende Gestaltung des Luftführungsschlauchs, während das Gebläsegehäuse für eine Vielzahl an verschiedenen Anwendungsfällen in identischer Ausführung zum Einsatz kommen kann. Insbesondere eignet sich die erfindungsgemäße Filtervorrichtung zum Einsatz in gekrümmten und/oder zerklüfteten Bauräumen, etwa in oder an gekrümmten Wandstrukturen und dergleichen.

In einer Weiterbildung kann das zumindest eine Filterelement auch lösbar in den Luftführungsschlauch eingesetzt sein. Hierzu kann insbesondere zumindest ein lösbares Verbindungsmittel, bevorzugt eine Klett- oder Magnetverbindung, zum Einsatz kommen.

In einer noch weiteren Ausführungsform kann der Luftführungsschlauch im Bereich der zumindest einen Öffnung einen Aufnahmerahmen aufweisen, der einen Rand aufweist, der um die Öffnung umläuft und mit dem Luftführungsschlauch fest verbunden ist. Der Aufnahmerahmen kann eine Einsetzöffnung bereitstellen, in die das zumindest eine Filterelement lösbar einsetzbar ist, sodass man bezüglich dieser Ausführungsform auch sagen könnte, das Filterelement ist mittelbar in die zumindest eine Öffnung des Luftführungsschlauchs eingesetzt.

Das Gebläsegehäuse kann beispielsweise eine quaderförmige, insbesondere würfelförmige, Gestalt aufweisen. Es kann aber auch eine hiervon abweichende Gestalt haben, etwa mit einer kreis- oder ellipsenförmigen Grundfläche.

Die erfindungsgemäße Filtervorrichtung ist primär dazu vorgesehen, im öffentlichen Außenraum, etwa an innerstädtischen Schadstoff-Hotspots, beispielsweise in unmittelbarer Nähe eines Fahrwegs, insbesondere in einem Tunnel, aufgestellt zu werden.

In einer bevorzugten Ausführung wird die erfindungsgemäße Vorrichtung in ihrem Betriebszustand derart aufgestellt, dass das Gebläsegehäuse in einer in Schwererichtung unten liegenden Montageposition vorliegt, während sich der Luftführungsschlauch im Wesentlichen entgegen der Schwererichtung oder unter einem Winkel hierzu von diesem weg erstreckt.

Das strömungstechnische System (Zusammenspiel der Vorrichtung zur Erzeugung des Luftstroms und des zumindest einen Filterelements) ist hierbei so ausgelegt, dass die Vorrichtung zur Erzeugung des Luftstroms den Luftführungsschlauch im Betriebszustand gewissermaßen aufblasen kann, sodass dieser durch die Innendruckbeaufschlagung eine definierte Form annimmt. Der Luftführungsschlauch ist daher bevorzugt innendruckstabil ausgelegt.

Der Luftführungsschlauch kann durch aus der Textil- und/oder Kunststoffindustrie bekannte Fertigungsverfahren wie Nähen und/oder Schweißen aus einem bahn- und/oder schlauchförmigen Ausgangsmaterial hergestellt werden.

Vorteilhaft stellt der Luftführungsschlauch mit dem zumindest einen Filterelement das Servicebauteil im Falle eines anstehenden Filterelementwechsels dar. Dies bietet den Vorteil, dass durch Lösen lediglich einer Verbindung (Luftführungsschlauch mit Luftauslass des Gebläsegehäuses) ein Austausch des zumindest einen Filterelements sowie der Luftführungsstruktur möglich ist. Ferner ist hierdurch ein sauberer Service gewährleistet; Schmutz und ggf. an dem zumindest einen Filterelement angefallener Filterkuchen sind sicher im Inneren des Luftführungsschlauchs eingeschlossen und können daher nicht in die Umgebung gelangen.

Gemäß einer bevorzugten Ausführungsform nimmt eine Innenquerschnittsfläche des Luftführungsschlauchs von dem ersten zu dem zweiten Ende hin ab. Hierdurch kann entlang einer Längserstreckung des Luftführungsschlauchs gezielt eine Beeinflussung des lokalen Durchströmungswiderstands erzielt werden, was insbesondere in den hierin beschrieben Ausführungen mit mehr als einem Filterelement signifikante Vorteile bietet, da hierdurch ein hydraulischer Abgleich mit dem Ziel einer gleichvolumigen Durchströmung aller Filterelemente möglich wird.

Um eine signifikante Luftmenge aufreinigen zu können, sollte die Filtervorrichtung eine bestimmte Mindestgröße haben. Der Luftführungsschlauch kann hierbei eine Länge von zumindest 0,5 m, bevorzugt zumindest 1,5m, stärker bevorzugt zumindest 2,5m, aufweisen. Die Querschnittsfläche des Luftführungsschlauchs in seinem expandierten (aufgeblasenen) Zustand, d.h. bei laufendem Gebläse, kann zwischen 0,01 und 0,5 m², bevorzugt zwischen 0,15 und 0,35 m², betragen.

In einer weiteren Ausführung kann vorgesehen sein, dass das zumindest eine Filterelement mit einem die Öffnung umgebenden Randbereich des Luftführungsschlauchs fluiddicht verbunden ist, insbesondere verschweißt, verklebt und/oder verpresst. Andere dem Fachmann geeignet erscheinende Verbindungstechniken sind jedoch nicht ausgeschlossen; so kann das Filterelement bei entsprechender Ausbildung, z. B. dem Vorsehen eines geeigneten Bundes, mit dem Randbereich auch vernäht sein.

Gemäß einer weiteren Ausführungsform kann das Gebläsegehäuse zumindest ein Gitter aufweisen, das den Lufteinlass und/oder den Luftauslass zumindest teilweise überspannt. Das Gitter stellt einen Eingriffschutz bereit und hält Grobschmutz ab, der ansonsten die Vorrichtung zur Erzeugung des Luftstroms beschädigen könnte

Bei der Vorrichtung zur Erzeugung des Luftstroms kann es sich um ein Axial-, Diagonaloder Radialgebläse handeln, das von einem Elektromotor angetrieben werden kann. Andere dem Fachmann geeignet erscheinende Antriebsarten sind möglich.

Zum Betrieb des Elektromotors kann die Filtervorrichtung bevorzugt einen elektrischen Anschluss umfassen. Bevorzugt kann der elektrische Anschluss auf Niederspannungsebene erfolgen. Die Filtervorrichtung kann jedoch auch Einrichtungen aufweisen, die einen Anschluss auf Mittelspannungsebene, etwa an Bahnstromnetze, ermöglichen.

Gemäß einer besonders bevorzugten Ausführung sind in dem Luftführungsschlauch zumindest zwei Öffnungen vorgesehen, bevorzugt zumindest drei Öffnungen, in die jeweils ein Filterelement eingesetzt ist. Die Öffnungen können hierbei in einer Längsrichtung des Luftführungsschlauchs beabstandet sein und/oder einander gegenüberliegend angeordnet sein. Es sind ausdrücklich auch Kombinationen der vorgenannten Ausführungen möglich.

Gemäß einer noch weiteren Ausführungsform kann die Filtervorrichtung eine Stützvorrichtung aufweisen, die den Luftführungsschlauch zumindest teilweise entlang seiner Längserstreckung stützt, insbesondere in einem Nicht-Betriebszustand der Filtervorrichtung, d.h. wenn die Vorrichtung zur Erzeugung des Luftstroms keinen Luftstrom erzeugt. Die Stützvorrichtung ist dazu vorgesehen, den Luftführungsschlauch in einem bezüglich der Längserstreckung zumindest teilweise expandierten Zustand zu halten und zu verhindern, dass dieser zusammensackt; dies hilft beim Wiederanlaufen der Vorrichtung und kann die Lebensdauer des Luftführungsschlauchs erhöhen, da Knickstellen vermieden werden.

Bei der Stützvorrichtung kann es sich um einen Innenstützrahmen bzw. Innenskelett handeln, der sich innerhalb des Luftführungsschlauchs erstreckt und zumindest im Bereich des ersten Endes des Luftführungsschlauchs mit dem Gebläsegehäuse verbunden ist. Der Innenstützrahmen kann beispielsweise leichte und hochelastische Stäbe aufweisen, etwa aus Faserverbundkunststoff. Aufgrund des geringen Eigengewichts des Luftführungsschlauchs ist hierzu keine steife und schwere Metallkonstruktion nötig. Ein Innenskelett aus Stäben aus Faserverbundkunststoff hat zudem den Vorteil, dass bei einer Aufstellung im Freien ggf. anfallende Windlasten bzw. die durch die Windlasten hervorgerufenen Verformungen des Luftführungsschlauchs durch die Stäbe aufgrund ihrer hohen Elastizität problemlos aufgenommen werden können. Der Innenstützrahmen kann sich an dem Luftführungsschlauch innenseitig quasi wie eine Zeltstange abstützen.

Alternativ oder zusätzlich kann die Stützvorrichtung einen Außenstützrahmen aufweisen, der sich außerhalb des Luftführungsschlauchs erstreckt und diesen umgibt. Der Luftführungsschlauch ist hierbei bevorzugt zumindest an seinem zweiten Ende an dem Außenstützrahmen befestigt, beispielsweise mittels eines Seils oder Drahts. Man könnte auch sagen, der Luftführungsschlauch ist an dem Außenstützrahmen aufgehängt. Sinnvoller Weise ist der Luftführungsschlauch an weiteren Positionen seiner Längserstreckung an dem Außenstützrahmen befestigt. Zur Befestigung über Seile- und/oder Drähte kann der Luftführungsschlauch eine oder mehrere Ösen aufweisen, die ein Aufreißen des Schlauchmaterials durch die Befestigung sicher verhindern.

Gemäß einer besonders bevorzugten Ausführungsform kann die Stützvorrichtung entlang ihrer Längserstreckung zumindest ein Gelenk aufweisen, welches zumindest einen Rotationsfreiheitsgrad aufweist. Das zumindest eine Gelenk unterteilt die Stützvorrichtung in einzelne gegeneinander verschwenkbare Stützvorrichtungssegmente. Eine Schwenkachse des zumindest einen Gelenks bzw. Scharniers verläuft dabei bevorzugt normal zur Längserstreckung. Gemäß einer ebenso bevorzugten Ausführungsform kann die Stützvorrichtung entlang ihrer Längserstreckung mehr als ein Gelenk, beispielsweise zwei, drei, vier oder noch mehr Gelenke aufweisen. Es kann hierbei auch vorgesehen sein, dass die Schwenkachsen einzelner Gelenke verschieden sind. Bevorzugt ist jedoch eine Ausführung, gemäß der die Schwenkachsen aller Gelenke parallel verlaufen. Diese Ausführung ermöglicht auch für Filtervorrichtungen mit Stützrahmen eine aus dem Stand der Technik bisher unbekannte Anpassbarkeit an komplexe Bauräume.

Gemäß einer weiteren Ausführung kann ein Stützvorrichtungssegment des Außenstützrahmens das Gebläsegehäuse zumindest teilweise aufnehmen. Das Stützvorrichtungssegment, welches das Gebläsegehäuse zumindest teilweise aufnimmt kann vorteilhafter Weise als Standfuß der Filtervorrichtung fungieren und soll hierzu ausreichend ausladend dimensioniert sein, um Kippmomente durch Eigengewichte des Luftführungsschlauchs, der Filterelemente und der Stützvorrichtung sowie ggf. Wind- und Schneelasten sicher aufzunehmen.

Gemäß einer zusätzlichen Weiterbildung kann das zumindest eine Filterelement zumindest einen Faltenbalg aus einem Filtermedium aufweisen. Das Filtermedium kann optional zumindest ein Adsorbens aufweisen, das zur Adsorption von vorbestimmten Schadgasen, etwa NOₓ, CO, NH₃ dienen kann. Bei dem Adsorbens kann es sich um zumindest eine Aktivkohle und/oder ein Zeolith handeln. Das Adsorbens kann insbesondere Teil des Filtermediums sein und als eine Schüttung in Form einer oder mehrerer Lage(n) darin vorliegen. Alternativ oder zusätzlich kann das Filterelement eine polygonale, insbesondere quaderförmige, Form aufweisen.

Alternativ oder zusätzlich kann das Filterelement ein Hauptfilterelement und ein in Strömungsrichtung vorgelagertes Vorfilterelement, insbesondere eine Vliesmatte, umfassen, wobei das Hauptfilterelement insbesondere als mit zumindest einem Faltenbalg aus Filtermedium ausgebildet ist. Alternativ oder zusätzlich kann es sich bei dem Filterelement um ein Filterelement handeln, das zumindest der Partikelfilterklasse ePM10 75% nach ISO 16890 entspricht. Bei dem Filterelement kann es sich insbesondere um ein Flachfilterelement handeln, dessen Mindestbreite und/oder Mindestlänge 100mm, bevorzugt 200 mm, stärker bevorzugt zumindest 300 mm, beträgt. Eine Faltenhöhe des Faltenbalgs kann zumindest 15 mm, bevorzugt zumindest 25 mm, stärker bevorzugt zumindest 35 mm, betragen.

Gemäß einer gleichermaßen bevorzugten Weiterbildung kann das Gebläsegehäuse zumindest zwei Luftauslässe aufweisen, wobei mit den Luftauslässen jeweils ein Luftführungsschlauch verbunden ist. Die Luftauslässe können an einander abgewandten Seiten des Gebläsegehäuses vorliegen, sodass eine Konfiguration erhalten wird, gemäß der sich die Luftführungsschläuche ausgehend von dem Gebläsegehäuse voneinander weg erstrecken. Eine solche Anordnung kann vorteilhaft sein, wenn die erfindungsgemäße Filtervorrichtung in einem Deckenbereich eines Raums oder eines Tunnels installiert werden soll, da mit einem gemeinsamen Gebläsegehäuse zwei räumlich getrennte Bereich mit Frischluft versorgt werden können.

Ferner kann vorgesehen sein, dass der Luftführungsschlauch mittels einer lösbaren Schlauchschnittstelle mit der zumindest einen Luftaustrittsöffnung des Gebläsegehäuses verbunden ist. Dies erleichtert den Service (Austausch der Filterelemente), da mit einem Handgriff (lösen der Schlauchschnittstelle) sowohl der Luftführungsschlauch als auch die Filterelemente (zusammen mit dem Luftführungsschlauch) von dem Gebläsegehäuse getrennt werden können.

Die Schlauchschnittstelle kann hierbei ein erstes Schnittstellenteil an dem Gebläsegehäuse und ein zweites Schnittstellenteil an dem ersten Ende des Luftführungsschlauchs aufweisen, wobei bevorzugt die Schlauchschnittstelle zumindest ein Gewinde- und/oder Bajonettverbindungselement aufweist. Alternativ oder zusätzlich können die korrespondierenden ersten und zweiten Schnittstellenteile auch eine Schlüssel-Schloss-Codierung aufweisen, die den Einbau eines falschen Luftführungsschlauchs (z. B. falsche Länge, unpassende Filtrationsparameter der Filterelemente) verhindert.

Eine ganz besonders bevorzugte Weiterbildung sieht vor, dass der Luftführungsschlauch ein ein- oder mehrlagiges Gewebe- und/oder Folienmaterial aufweist oder daraus besteht, das eine Dicke in einem Bereich von 0,05 bis 5 mm, bevorzugt 0,1 bis 2 mm, aufweist. Derartige Folienmaterialien bieten einen guten Kompromiss zwischen Eigengewicht, Abriebsfestigkeit und Innendruckstabilität. Besonders bevorzugte Werkstoffe sind thermoplastische Kunststoffe wie etwa Polypropylen, Polyethylen, Polystyrol, Polyamid, Polyvinylchlorid, Polyethylenterephthalat, Polyoxymethylen.

Alternativ oder zusätzlich kann der Luftführungsschlauch zumindest eine innenliegende Strömungsleitstruktur aufweisen, die bevorzugt aus dem ein- oder mehrlagigen Gewebeund/oder Folienmaterial besteht. Vorteilhaft werden durch die zumindest eine innenliegende Strömungsleitstruktur zumindest zwei innenseitig untereinander teilabgeschlossene Kompartimente innerhalb des Luftführungsschlauchs gebildet. Ähnlich wie die hierin beschriebene Verjüngung des Luftführungsschlauch zu seinem zweiten Ende hin kann auch durch eine oder mehrere Strömungsleitstruktur(en) ein hydraulischer Abgleich bei Ausführungen mit mehreren in Richtung der Längserstreckung benachbart angeordneten Filterelementen erreicht werden, wobei hierzu ein durch die Strömungsleitstruktur(en) bereitgestellter Strömungsquerschnitt innenseitig lokal gezielt verengt wird. Die Strömungsleitstruktur kann normal zu der Längserstreckung ausgerichtet sein oder gegenüber der Normalen einen vorbestimmten Anstellwinkel aufweisen. Einfach und kostengünstig können derartige Strömungsleitstrukturen als eingenähte oder eingeschweißte Zwischenwände des Luftführungsschlauchs hergestellt werden.

Gemäß einer noch weiteren Ausführungsform liegt an dem Gebläsegehäuse die zumindest eine Luftaustrittsöffnung umgebend ein Luftführungsstutzen vor, der sich entlang der Längserstreckung des Luftführungsschlauchs zumindest teilweise in den Luftführungsschlauch hinein erstreckt. Bevorzugt verjüngt sich der Luftführungsstutzen in einer von dem Gebläsegehäuse weg weisenden Richtung. Der Luftführungsstutzen bietet den technischen Vorteil, dass eine Ausströmung gezielt in das Schlauchinnere erfolgt und der Schnittstellenbereich der Anbindung des Luftführungsschlauchs an das Gebläsegehäuse von Strömungseinwirkungen entlastet wird. Eine sich verjüngende, insbesondere konische, Ausbildung des Luftführungsstutzens hat darüber hinaus den Vorteil, dass weitestgehend verhindert werden kann, dass beim Service Schmutz, welcher sich im Laufe des Betriebs in einem die Luftaustrittsöffnung umgebenden Bereich angelagert hat, in den Luftaustrittsstutzen fällt und im Gebläsegehäuse die Vorrichtung zur Erzeugung des Luftstroms beschädigen kann.

Gemäß einer vorteilhaften Weiterbildung kann der Luftführungsstutzen aus einem einoder mehrlagigen Gewebe- und/oder Folienmaterial bestehen. Der Luftführungsstutzen kann an dem Gebläsegehäuse befestigt sein oder Teil des Luftführungsschlauchs sein, sodass dieser im Servicefall ebenfalls mit ausgetauscht wird. Vorteilhafterweise besteht der Luftführungsstutzen jedoch aus einem Material, das eine höhere Eigensteifigkeit hat als ein Material des Luftführungsschlauchs, sodass dieser auch in dem Nicht-Betriebszustand nicht kollabiert und seine Schutzfunktion ausüben kann.

Ein weiterer Aspekt der Erfindung betrifft einen Luftführungsschlauch mit zumindest einem Filterelement für eine Filtervorrichtung nach einem der vorigen Ansprüche, wobei der Luftführungsschlauch biegeschlaff ausgebildet ist und ein erstes offenes Ende aufweist, das mit dem Luftauslass des Gebläsegehäuses der Filtervorrichtung verbindbar ist, und ein zweites geschlossenes Ende aufweist. In dem Luftführungsschlauch liegt zwischen dem ersten und dem zweiten Ende zumindest eine Öffnung vor, in die zumindest ein Filterelement eingesetzt ist.

Der Luftführungsschlauch weist erfindungsgemäß eine geringere Luftdurchlässigkeit auf als das zumindest eine Filterelement.

Insbesondere weist der Luftführungsschlauch an dem ersten Ende ein Schnittstellenteil einer Schlauchschnittstelle auf, bevorzugt zumindest ein Gewinde- und/oder Bajonettverbindungselement, welches eine vorbestimmte Schlüssel-Schloss Codierung aufweist.

Schließlich betrifft ein letzter Aspekt der Erfindung einen Tunnel, insbesondere Fahrzeugtunnel, beispielsweise Schienenfahrzeugtunnel, oder Personentunnel. Der Tunnel weist einen Tunnelboden, eine Tunneldecke und zumindest eine Tunnelwand auf, wobei die Tunnelwand eine gekrümmte Querschnittsform aufweisen kann. An oder in der zumindest einen gekrümmten Tunnelwand ist eine erfindungsgemäße Filtervorrichtung angeordnet. Aufgrund ihres flexiblen Aufbaus und ihrer hervorragenden Anpassbarkeit an komplexe, insbesondere gekrümmte Bauräume, ist die erfindungsgemäße Filtervorrichtung perfekt in oder an der gekrümmten Tunnelwand aufgenommen. Diese kann insbesondere in einen Hohlraum zwischen einer Tunnelstützstrukur (Rohbau) und einer Tunnelverkleidung integriert werden, dass diese nicht über die Tunnelverkleidung hinaus ragt und das Lichtraumprofil des Tunnels nicht einschränkt.

Der erfindungsgemäße Tunnel weist gegenüber bekannten Tunneln ohne Filtervorrichtung eine deutlich verbesserte Luftqualität auf, was insbesondere bei Tunneln, in welchen sich Personen aufhalten, beispielsweise in Tunnelbahnhöfen, ein wichtiger Aspekt ist. Herkömmliche Tunnelbahnhöfe, insbesondere U-Bahnhöfe, weisen häufig hinsichtlich Luftschadstoffen wie PM2,5 und/oder PM5 und/oder PM10 mehrfach über den jeweiligen Grenzwerten für Außenluft liegende Belastungen auf. Dies kann mit dem erfindungsgemäßen Tunnel in einfacher Art und Weise und quasi "unsichtbar" vermieden werden.

Ein weiterer Aspekt der Erfindung betrifft eine Verwendung einer erfindungsgemäßen Filtervorrichtung zur Umgebungsluftfiltration in einem Tunnel.

### Kurze Beschreibung der Zeichnungen

Weitere Vorteile ergeben sich aus der folgenden Zeichnungsbeschreibung. In den Zeichnungen sind Ausführungsbeispiele der Erfindung dargestellt. Die Zeichnungen, Beschreibung und Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen beispielhaft:
- Figur 1: eine Vorderansicht der erfindungsgemäßen Filtervorrichtung gemäß einer ersten Ausführungsform;
- Figur 2a: eine Seitenansicht der erfindungsgemäßen Filtervorrichtung gemäß der ersten Ausführungsform;
- Figur 2b: Seitenansicht gemäß der Figur 2a mit Strömungspfeilen;
- Figur 3: eine Vorderansicht der erfindungsgemäßen Filtervorrichtung gemäß einer zweiten Ausführungsform;
- Figur 4: eine Seitenansicht der erfindungsgemäßen Filtervorrichtung gemäß der zweiten Ausführungsform;
- Figur 5: eine Vorderansicht der erfindungsgemäßen Filtervorrichtung gemäß einer dritten Ausführungsform;
- Figur 6: eine Längsschnittansicht der erfindungsgemäßen Filtervorrichtung gemäß der dritten Ausführungsform;
- Figur 7a: eine Vorderansicht der erfindungsgemäßen Filtervorrichtung gemäß einer vierten Ausführungsform;
- Figur 7b: eine Längsschnittansicht der erfindungsgemäßen Filtervorrichtung gemäß der vierten Ausführungsform;
- Figur 8: eine Längsschnittansicht eines erfindungsgemäßen Luftführungsschlauchs gemäß einer ersten Ausführungsform;
- Figur 9: eine Längsschnittansicht eines erfindungsgemäßen Luftführungsschlauchs gemäß einer zweiten Ausführungsform;
- Figur 10: eine Längsschnittansicht der erfindungsgemäßen Filtervorrichtung gemäß einer fünften Ausführungsform.

### Ausführungsformen der Erfindung

In den Figuren sind gleiche oder gleichartige Komponenten mit gleichen Bezugszeichen beziffert. Die Figuren zeigen lediglich Beispiele und sind nicht beschränkend zu verstehen.

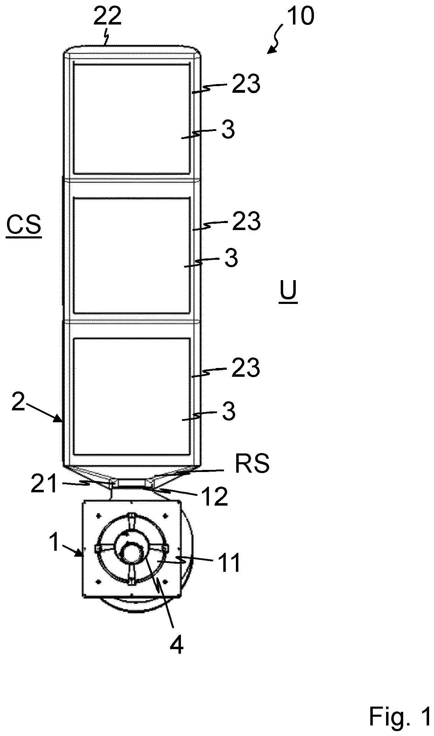

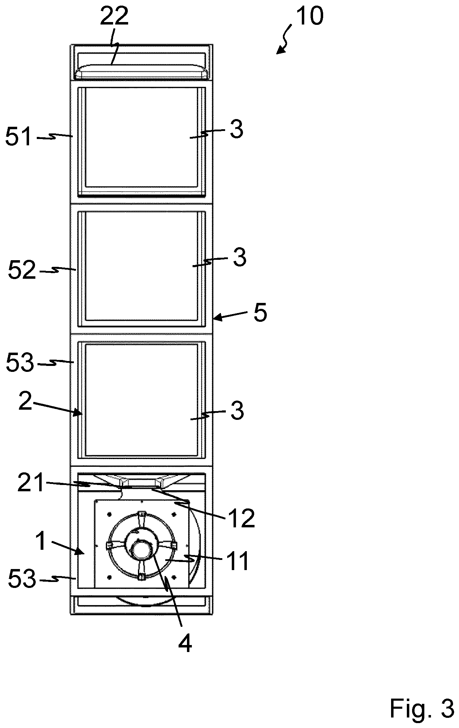

Die erfindungsgemäße Filtervorrichtung 10 ist in der **Fig. 1** in einer Vorderansicht in einer ersten Ausführungsform gezeigt. Diese verfügt über ein Gebläsegehäuse 1, das eine Lufteinlassöffnung 11 und eine Luftauslassöffnung 12 hat. Zwischen der Lufteinlassöffnung 11 und der Luftauslassöffnung 12 ist ein Strömungsweg ausgebildet, in dem, stromabwärts der Lufteinlassöffnung 11 und stromaufwärts der Luftauslassöffnung 12, eine Vorrichtung zur Erzeugung eines Luftstroms 4 vorliegt, bevorzugt ein Gebläse, insbesondere Radialgebläse. Die Vorrichtung zur Erzeugung eines Luftstroms 4 saugt im Betrieb Luft durch die Lufteinlassöffnung 11 ein und bläst diese unter Druck aus der Luftauslassöffnung 12 aus. Mit einem die Luftauslassöffnung 12 umgebenden Rand des Gebläsegehäuses 1 bzw. mit einem Luftauslasstutzen (nicht gezeigt) ist ein Luftführungsschlauch 2 mit seinem ersten offenen Ende 21 fluiddicht befestigt, sodass Luft, die aus der Luftauslassöffnung 12 geblasen wird, in einen Innenraum des Luftführungsschlauchs 2 geleitet wird. An einem dem ersten Ende 21 abgewandten zweiten Ende 22 des Luftführungsschlauchs 2 ist der Luftführungsschlauch 2 geschlossen ausgebildet. Der Luftführungsschlauch 2 ist aus einem biegeschlaffen Material, wie etwa einem ein- oder mehrlagigen Folien- und/oder Gewebematerial ausgebildet und kann in einem Betriebszustand mittels des Gebläses 4 aufgeblasen werden. Wenn das Gebläse außer Betrieb genommen wird, sackt der Luftführungsschlauch 2 aufgrund seiner geringen Eigensteifigkeit in sich zusammen. Maßnahmen, um dieses Zusammensacken zu vermeiden werden im Rahmen der Figuren 3 ff. sowie im allgemeinen Teil der Beschreibung sowie in den Ansprüchen offenbart.

In dem Luftführungsschlauch 2 sind drei Öffnungen 23 vorgesehen, in die jeweils ein Filterelement 3 eingesetzt ist. Die Filterelemente 3 sind jeweils mit einem Rand der Öffnung, d.h. mit dem Material des Luftführungsschlauchs 2 verbunden. Die Filterelemente 3 können mit dem Luftführungsschlauch 2 beispielsweise durch Kleben, Schweißen, Nähen verbunden sein. Die Filterelemente 3 weisen jeweils zumindest ein Filtermedium auf, das dazu ausgelegt ist, bestimmte Partikel- und/oder Schadgase aus der Luft zu filtern. Das Filtermedium kann insbesondere zu einem Faltenbalg gefaltet vorliegen oder in flacher Form. Es kann auch ein Vorfilterelement vorgesehen werden, das dem (Haupt-)Filterelement in Strömungsrichtung vorgelagert ist.

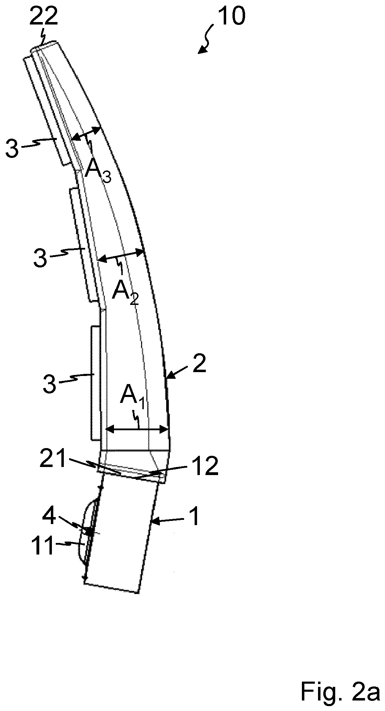

In der **Fig. 2a** ist die Filtervorrichtung 10 in einer Seitenansicht gezeigt, wobei zu erkennen ist, dass eine Querschnittsfläche des Luftführungsschlauchs 2 sich in Strömungsrichtung, d.h. von dem ersten Ende 21 zu dem zweiten Ende 22 hin verjüngt, weshalb A₁>A₂>A₃ gilt. Dies hat den Effekt, dass hierdurch die Durchströmung der einzelnen Filterelemente 3 vergleichmäßigt wird, sodass sich eine Schmutzbeladung homogen auf alle Filterelemente 3 verteilt und alle eine ungefähr gleiche Lebensdauer haben. Ferner schafft eine solche Ausführung eine Materialeinsparung beim Luftführungsschlauch 2, da die Oberfläche geringer ist, weshalb der Luftführungsschlauch 2 kostengünstiger herstellbar ist.

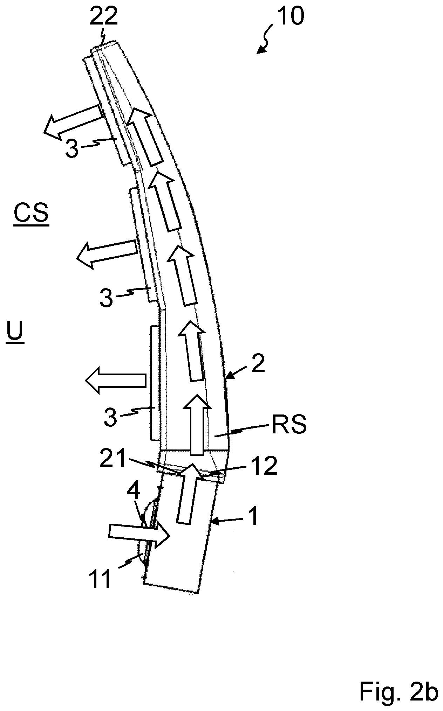

Eine Durchströmung der Filtervorrichtung 10 ist schematisch in der **Fig. 2b** gezeigt. Die Luft strömt von der Umgebung U in die Lufteintrittsöffnung 11 des Gebläsegehäuses 1, durch die Vorrichtung zur Erzeugung des Luftstroms 4, zur Luftaustrittsöffnung 12 des Gebläsegehäuses 1 und von dort in das Innere des Luftführungsschlauchs 2, wo die Rohseite RS vorliegt, bevor sie durch die einzelnen Filterelemente 3 zur Reinseite CS und damit zurück in die Umgebung U geführt wird.

Die erfindungsgemäße Filtervorrichtung 10 ist nicht nur besonders flexibel und gut an komplexe, insbesondere gekrümmte und/oder sonst wie zerklüftete Bauräume anpassbar, sondern erlaubt auch einen überraschend sauberen Service (=Austausch des Luftführungsschlauch). Im Servicefall wird die lösbare Befestigung des ersten offenen Endes 21 des Luftführungsschlauchs 2 von der Luftaustrittsöffnung 12 bzw. dem Luftaustrittsstutzen des Gebläsegehäuses 1 gelöst, woraufhin der Luftführungsschlauch 2 quasi wie ein Sack zusammengefaltet werden kann, wobei abgeschiedene Partikel, die sich auf der Rohseite befinden, im Inneren des Luftführungsschlauchs 2 zurückgehalten werden.

Die Befestigung des Luftführungsschlauchs 2 an der Luftaustrittsöffnung 12 bzw. dem Luftaustrittsstutzen des Gebläsegehäuses 1 kann im einfachsten Fall durch eine Schlauchschelle realisiert werden, die den Luftaustrittsstutzen unter Verpressung des Luftführungsschlauchs 2 umgreift. Alternativ kann eine lösbare Schlauchschnittstelle vorgesehen sein, die ein erstes Schnittstellenteil an dem Gebläsegehäuse und ein zweites Schnittstellenteil an dem ersten Ende des Luftführungsschlauchs aufweist. Dies ist jedoch figurativ nicht dargestellt.

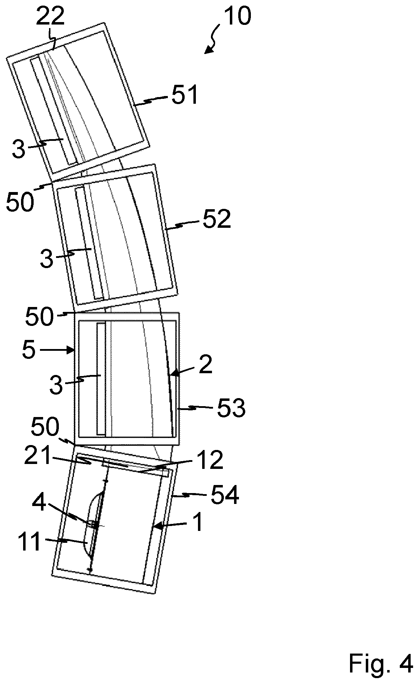

In der **Fig. 3** ist eine Filtervorrichtung 10 gemäß einer zweiten Ausführungsform in einer Vorderansicht gezeigt. Vom Grundaufbau her entspricht diese der ersten Ausführungsform, weshalb hier nur auf die Unterschiede eingegangen wird. Um hierin bereits beschriebenes "Zusammensacken" des Luftführungsschlauchs 2 im Nicht-Betriebszustand des Gebläses 4 zu vermeiden ist die Filtervorrichtung 10 mit einer Stützvorrichtung in Form eines Außenstützrahmens 5 versehen. Der Luftführungsschlauch 2 ist zumindest im Bereich seines zweiten Endes 22 mit dem Außenstützrahmen 5 verbunden, beispielsweise vermittels zumindest eines Seils oder Drahts. Zur Befestigung des Seils oder Drahts an dem Luftführungsschlauch 2 kann zumindest eine Verstärkungsöse in das Material des Luftführungsschlauchs 2 eingesetzt sein. Optional kann der Luftführungsschlauch 2 noch an weiteren Stellen mit dem Außenstützrahmen 5 verbunden sein, was jedoch figurativ nicht gezeigt ist. Der Außenstützrahmen 5 verfügt über vier Stützvorrichtungssegmente 51-54, die jeweils als quaderförmiger Rahmen ausgebildet sind. Die einzelnen Stützvorrichtungssegmente 51-54 sind untereinander jeweils mittels zumindest eines Scharniers oder Gelenks 50 verbunden, das einen Rotationsfreiheitsgrad hat. Die einzelnen Stützvorrichtungssegmente 51-54 können daher untereinander verkippt werden, was in der **Fig. 4** gezeigt ist. Die Rotationsachsen der Gelenke 50 sind hierbei alle parallel. In einer nicht figurativ gezeigten Ausführungsform können die Rotationsachsen der Gelenke 50 jedoch auch unter einem Winkel zueinander stehen.

Eine derartige Verkippbarkeit der Stützvorrichtungssegmente 51-54 erlaubt eine Anpassung der Filtervorrichtung 10 an einen gekrümmten Bauraum, etwa in einer Tunnelwand; der Luftführungsschlauch 2 passt sich jeder Verkippung der Stützvorrichtungssegmente 51-54 an, da er erfindungsgemäß aus dem biegeschlaffen (Folien-)Material gebildet ist.

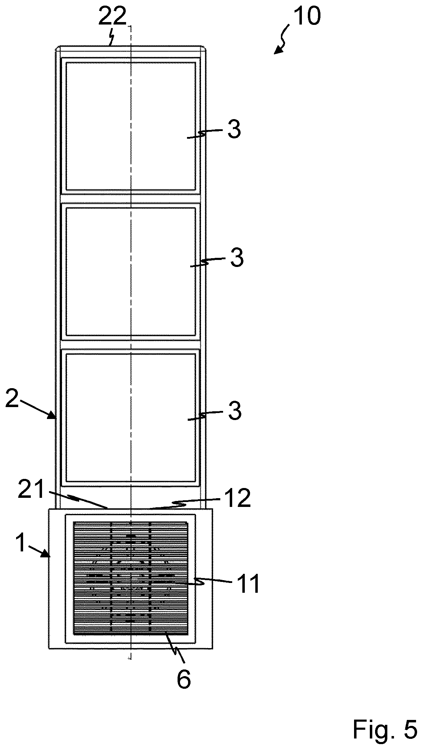

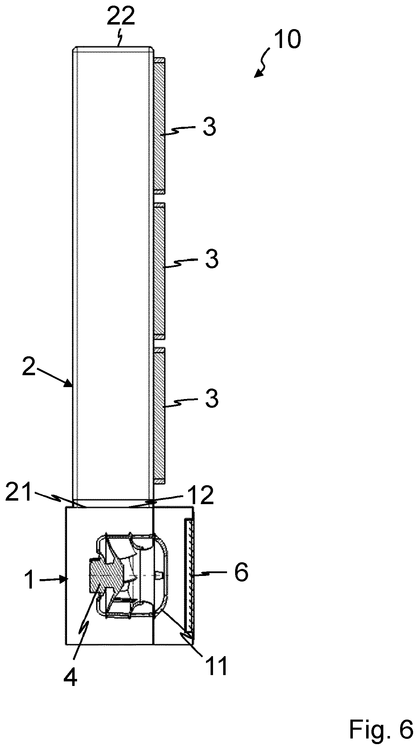

In der **Fig. 5** ist eine weitere (dritte) Ausführungsform der erfindungsgemäßen Filtervorrichtung 10 gezeigt. Diese unterscheidet sich von der zweiten Ausführungsform durch ein luftdurchlässiges Gitter 6, welches die Lufteintrittsöffnung 11 überdeckt. Das Gitter 6 verhindert den Eintritt von Fremdkörpern und begrenzt aus Sicherheitsaspekten den Eingriff ins Innere des Gebläsegehäuses 1. **Fig. 6** zeigt eben die dritte Ausführungsform in einer Längsschnittansicht.

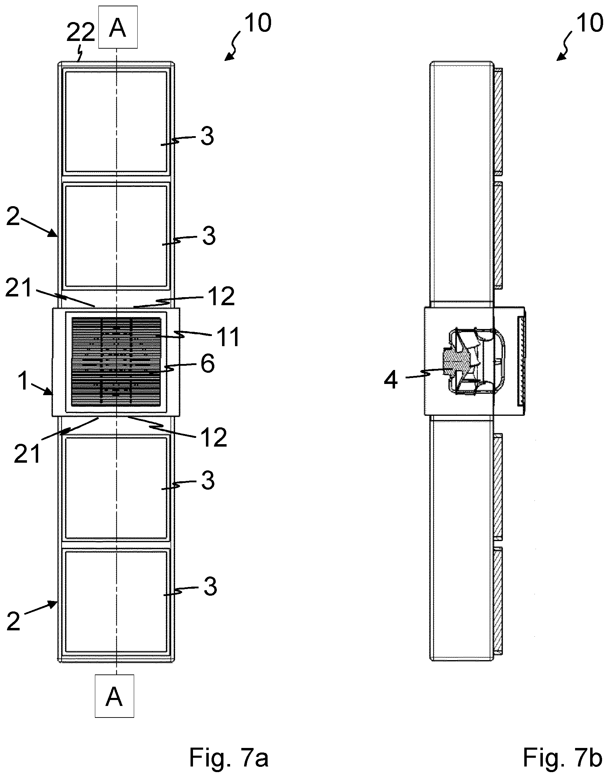

**Fig. 7a** und **Fig. 7b** zeigen eine erfindungsgemäße Filtervorrichtung 10 gemäß einer vierten Ausführungsform. Diese unterscheidet sich insoweit von den hierin vorbeschriebenen Varianten als das Gebläsegehäuse 1 zwei Luftauslassöffnungen 12 hat, mit denen jeweils ein Luftführungsschlauch 2 verbunden ist. Die beiden Luftauslassöffnungen 12 werden ausgehend von einer gemeinsamen Lufteinlassöffnung 11 mit Luft versorgt. Die Luftauslassöffnungen 12 befinden sich an einander abgewandten Seiten des Gebläsegehäuses 1. Diese Ausführungsform lässt sich selbstverständlich beliebig mit Merkmalen weiterer Ausführungsformen kombinieren; so kann insbesondere auch gemäß dieser Ausführungsform eine Stützvorrichtung (innen oder außen) vorgesehen werden, die den Luftführungsschlauch 2 im Nicht-Betriebszustand des Gebläses 4 stützt. Die Filtervorrichtung 10 gemäß der vierten Ausführungsform bietet den Vorteil, dass bidirektional gefilterte Luft bereitgestellt werden kann. Beispielsweise kann die Filtervorrichtung 10 in einem Deckenbereich eines Tunnels installiert werden mit dem Gebläsegehäuse 1 an der Decke des Tunnels, wobei sich die beiden Luftführungsschläuche 2 entlang der Tunnelwände erstrecken können, sodass in einem Bereich, in dem sich Personen aufhalten, Frischluft bereitgestellt werden kann. In weiteren nicht figurativ gezeigten Ausführungsformen kann die Filtervorrichtung 10 auch mehr als zwei Luftauslassöffnungen 12 mit mehr als zwei Luftführungsschläuchen 2 aufweisen, die beispielsweise über einen kompletten Umfang des Gebläsegehäuses 1 vorliegen können.

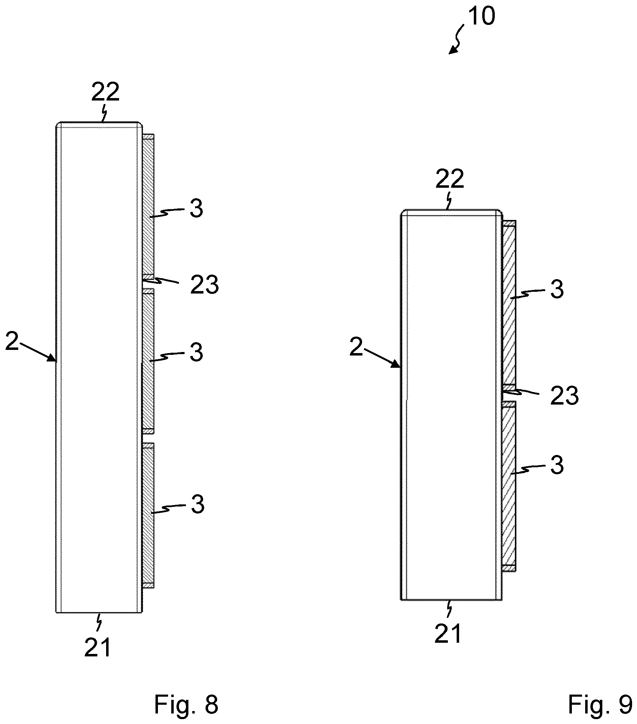

In den **Fig. 8** und **Fig. 9** ist der erfindungsgemäße Luftführungsschlauch 2 mit zumindest einem Filterelement 3 gezeigt. Gemäß Fig. 8 weist dieser drei Öffnungen 23 mit jeweils einem Filterelement 3 auf und gemäß Fig. 9 zwei Öffnungen 23 mit jeweils einem Filterelement 3. An dem ersten Ende 21 ist der Luftführungsschlauch 2 offen ausgebildet zum Anschluss an die Luftauslassöffnung des Gebläsegehäuses der Filtervorrichtung, während er an dem zweiten Ende 22 geschlossen ausgebildet ist. Der Querschnitt des Luftführungsschlauchs kann polygonal, insbesondere rechteckförmig, kreisförmig, ellipsenförmig, sternförmig oder sonst wie gestaltet sein. Aufgrund des biegeschlaffen Materials des Luftführungsschlauchs 2 sind der Formenvielfalt kaum Grenzen gesetzt. An dem ersten Ende 21 kann insbesondere ein zweites Schnittstellenteil vorliegen, das eine schnelle Kopplung mit einem ersten Schnittstellenteil am Gebläsegehäuse erlaubt. Das zweite Schnittstellenteil kann hierbei zumindest ein Gewinde- und/oder Bajonettverbindungselement aufweisen und/oder eine vorbestimmte Schlüssel-Schloss Codierung aufweisen, sodass die Montage von unpassenden Filterelementen vermieden werden kann.

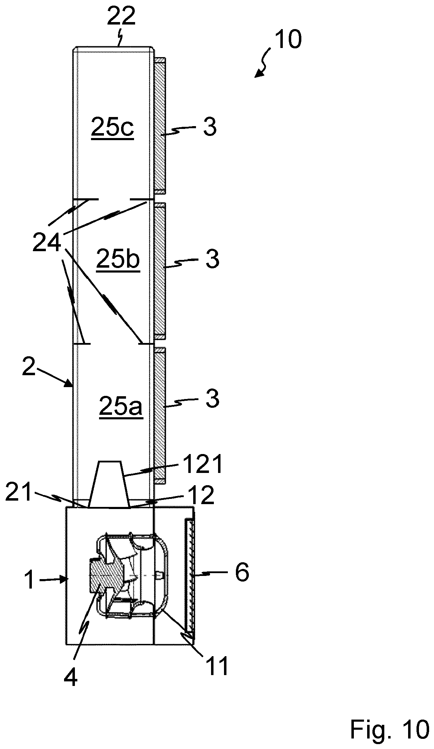

Schließlich ist in der **Fig. 10** eine fünfte Ausführungsform gezeigt, die von ihrem Grundaufbau der dritten Ausführungsform gemäß Fig. 6 entspricht. Hier ist jedoch an der Luftauslassöffnung 12 des Gebläsegehäuses 1 ein Luftführungsstutzen 121 vorgesehen, der sich teilweise axial in den Innenraum des Luftführungsschlauchs 2 hinein erstreckt. Der Luftführungsstutzen 121 verjüngt sich in einer von dem Gebläsegehäuse 1 weg weisenden Richtung (in Strömungsrichtung) und stellt somit eine Strömungsfokussierung bereit, die verhindert, dass ein Anschlussbereich des Luftführungsschlauchs 2 im Bereich seines ersten Endes 21 durch dynamische Einwirkungen der Strömung überlastet wird. Ferner sind in dem Luftführungsschlauch 2 diverse Strömungsleitstrukturen 24 vorgesehen, welche bevorzugt aus dem Material des Luftführungsschlauchs 2 gebildet sind und in den Innenraum des Luftführungsschlauchs 2 einragen. Die Strömungsleitstrukturen 24 sind als umlaufende Zwischenwände ausgeführt, lassen jedoch einen zentralen Strömungsquerschnitt frei. Ähnlich wie ein in Axialrichtung sich verjüngender Verlauf dienen diese der Anpassung der Strömungswiderstände in Axialrichtung, mit dem Ziel eine Vergleichmäßigung der Strömung durch die Filterelemente 3 zu erreichen. Zu diesem Zweck ragen die Strömungsleitstrukturen 24 zwischen dem ersten und dem zweiten Kompartiment 25a, 25b weniger weit in den Innenraum ein als die Strömungsleitstrukturen 24 zwischen dem zweiten und dem dritten Kompartiment 25b, 25c. Selbstverständlich können die beiden Maßnahmen (Luftführungsstutzen 121 und Strömungsleitstrukturen 24) auch in Alleinstellung eingesetzt werden und nicht nur in Kombination.

### Bezugszeichenliste

- 1: Gebläsegehäuse
- 11: Lufteinlassöffnung
- 12: Luftauslassöffnung
- 121: Luftführungsstutzen
- 2: Luftführungsschlauch
- 21: Erstes offenes Ende
- 22: Zweites geschlossenes Ende
- 23: Öffnung des Luftführungsschlauchs
- 24: Strömungsleitstruktur
- 25: Kompartimente des Luftführungsschlauchs
- 3: Filterelement
- 4: Vorrichtung zur Erzeugung eines Luftstroms / Gebläse
- 10: Filtervorrichtung
- Aₙ: Lokale Querschnittsfläche des Luftführungsschlauchs
- 5: Stützvorrichtung/Außenstützrahmen
- 51-54: Stützvorrichtungssegmente
- 50: Gelenk/Scharnier
- 6: Gitter
- CS: Reinseite
- RS: Rohseite
- U: Umgebung

## Patentansprüche

1. Filtervorrichtung (10), insbesondere zur stationären Umgebungsluftfiltration, mit einem Gebläsegehäuse (1), das zumindest einen Lufteinlass (11) und zumindest einen Luftauslass (12) aufweist, wobei in dem Gebläsegehäuse (1) zumindest eine Vorrichtung zur Erzeugung eines Luftstroms (4) angeordnet ist, mittels der ein Luftstrom von dem Lufteinlass (11) zu dem Luftauslass (12) erzeugbar ist, **dadurch gekennzeichnet, dass** die Filtervorrichtung (10) zumindest einen biegeschlaffen Luftführungsschlauch (2) aufweist, wobei der Luftführungsschlauch (2) ein erstes offenes Ende hat (21), das mit dem Luftauslass (12) des Gebläsegehäuses (1) verbunden ist, und ein zweites geschlossenes Ende (22) hat, wobei in dem Luftführungsschlauch (2) zwischen dem ersten (21) und dem zweiten Ende (22) zumindest eine Öffnung (23) vorliegt, an der zumindest ein Filterelement (3) angeordnet ist, wobei das Filterelement (3) eine Rohseite (RS) innerhalb des Luftführungsschlauchs (2) von einer stromabwärts des Filterelements (3) vorliegenden Reinseite (CS) trennt, wobei der Luftführungsschlauch (2) in einem Betriebszustand vermittels der Vorrichtung zur Erzeugung des Luftstroms (4) aufblasbar ist und eine geringere Luftdurchlässigkeit aufweist als das zumindest eine Filterelement (3).

2. Filtervorrichtung (10) nach Anspruch 1, **dadurch gekennzeichnet, dass** der Luftführungsschlauch (2) nicht luftdurchlässig ist, wobei der Luftführungsschlauch (2) insbesondere ein nicht luftdurchlässiges Material aufweist oder daraus besteht.

3. Filtervorrichtung (10) nach Anspruch 1 oder 2, **dadurch gekennzeichnet, dass** eine Innenquerschnittsfläche (A₁-Aₙ) des Luftführungsschlauchs (2) von dem ersten (21) zu dem zweiten Ende (22) abnimmt.

4. Filtervorrichtung (10) nach Anspruch 1 bis 3, **dadurch gekennzeichnet, dass** das zumindest eine Filterelement (3) mit einem die Öffnung (23) umgebenden Randbereich des Luftführungsschlauchs (2) fluiddicht verbunden ist, insbesondere verschweißt, verklebt und/oder verpresst.

5. Filtervorrichtung (10) nach einem der vorigen Ansprüche, **dadurch gekennzeichnet, dass** in dem Luftführungsschlauch (2) zumindest zwei Öffnungen (23), bevorzugt zumindest drei Öffnungen (23), vorliegen, an der jeweils ein Filterelement (3) angeordnet ist, wobei bevorzugt die Öffnungen (23) in einer Längsrichtung des Luftführungsschlauchs (2) beabstandet sind und/oder einander gegenüberliegend angeordnet sind.

6. Filtervorrichtung (10) nach einem der vorigen Ansprüche, **dadurch gekennzeichnet, dass** die Filtervorrichtung (10) eine Stützvorrichtung (5) aufweist, die den Luftführungsschlauch (2) zumindest teilweise entlang seiner Längserstreckung stützt.

7. Filtervorrichtung (10) nach Anspruch 6, **dadurch gekennzeichnet, dass** die Stützvorrichtung (5) einen Innenstützrahmen aufweist, der sich innerhalb des Luftführungsschlauchs (2) erstreckt und zumindest im Bereich des ersten Endes (21) des Luftführungsschlauchs (2) mit dem Gebläsegehäuse (1) verbunden ist.

8. Filtervorrichtung (10) nach Anspruch 6 oder 7, **dadurch gekennzeichnet, dass** die Stützvorrichtung (5) einen Außenstützrahmen (5) aufweist, der sich außerhalb des Luftführungsschlauchs (2) erstreckt und diesen umgibt, wobei der Luftführungsschlauch (2) bevorzugt zumindest an seinem zweiten Ende (22) an dem Außenstützrahmen (5) befestigt ist, besonders bevorzugt mittels eines Seils oder Drahts.

9. Filtervorrichtung (10) nach einem der vorigen Ansprüche, **dadurch gekennzeichnet, dass** das zumindest eine Filterelement (3) zumindest einen Faltenbalg aus einem Filtermedium aufweist, wobei bevorzugt das Filtermedium zumindest ein Adsorbens aufweist, insbesondere eine Aktivkohle und/oder ein Zeolith, und wobei bevorzugt das Filterelement (3) eine polygonale, insbesondere quaderförmige, Form aufweist.

10. Filtervorrichtung (10) nach einem der vorigen Ansprüche, **dadurch gekennzeichnet, dass** das Gebläsegehäuse (1) zumindest zwei Luftauslässe (12) aufweist, wobei mit den Luftauslässen (12) jeweils ein Luftführungsschlauch (2) verbunden ist, wobei bevorzugt die Luftauslässe (12) an einander abgewandten Seiten des Gebläsegehäuses (1) vorliegen.

11. Filtervorrichtung (10) nach einem der vorigen Ansprüche, **dadurch gekennzeichnet, dass** der Luftführungsschlauch (2) mittels einer lösbaren Schlauchschnittstelle mit der zumindest einen Luftaustrittsöffnung (12) des Gebläsegehäuses (1) verbunden ist.

12. Filtervorrichtung (10) nach Anspruch 11, **dadurch gekennzeichnet, dass** die Schlauchschnittstelle ein erstes Schnittstellenteil an dem Gebläsegehäuse (1) und ein zweites Schnittstellenteil an dem ersten Ende (21) des Luftführungsschlauchs (2) aufweist, wobei bevorzugt die Schlauchschnittstelle zumindest ein Gewindeund/oder Bajonettverbindungselement aufweist, welches besonders bevorzugt eine vorbestimmte Schlüssel-Schloss Codierung aufweist.

13. Filtervorrichtung (10) nach einem der vorigen Ansprüche, **dadurch gekennzeichnet, dass** der Luftführungsschlauch (2) zumindest eine innenliegende Strömungsleitstruktur (24) aufweist, die bevorzugt aus dem ein- oder mehrlagigen Gewebe- und/oder Folienmaterial besteht, wobei besonders bevorzugt durch die zumindest eine innenliegende Strömungsleitstruktur (24) zumindest zwei innenseitig untereinander teilabgeschlossene Kompartimente innerhalb des Luftführungsschlauchs (2) gebildet werden.

14. Luftführungsschlauch (2) mit zumindest einem Filterelement (3) für eine Filtervorrichtung (10) nach einem der vorigen Ansprüche, wobei der Luftführungsschlauch (2) biegeschlaff ausgebildet ist und ein erstes offenes Ende (21) hat, das mit dem Luftauslass (12) des Gebläsegehäuses (1) der Filtervorrichtung (1) verbindbar ist, und ein zweites geschlossenes Ende (22) aufweist, wobei in dem Luftführungsschlauch (2) zwischen dem ersten (21) und dem zweiten Ende (22) zumindest eine Öffnung (23) vorliegt, an der zumindest ein Filterelement (3) angeordnet ist, wobei das Filterelement (3) eine Rohseite (RS) innerhalb des Luftführungsschlauchs (2) von einer stromabwärts des Filterelements (3) vorliegenden Reinseite (CS) trennt, wobei der Luftführungsschlauch (2) in einem Betriebszustand vermittels der Vorrichtung zur Erzeugung des Luftstroms (4) aufblasbar ist und wobei der Luftführungsschlauch (2) eine geringere Luftdurchlässigkeit aufweist als das zumindest eine Filterelement (3).

15. Luftführungsschlauch (2) nach Anspruch 14, **dadurch gekennzeichnet, dass** der Luftführungsschlauch (2) an dem zweiten Ende ein Schnittstellenteil einer Schlauchschnittstelle aufweist, bevorzugt zumindest ein Gewinde- und/oder Bajonettverbindungselement, welches besonders bevorzugt eine vorbestimmte Schlüssel-Schloss Codierung aufweist.

16. Tunnel, insbesondere Fahrzeugtunnel, insbesondere Schienenfahrzeugtunnel, oder Personentunnel, der einen Tunnelboden, eine Tunneldecke und zumindest eine Tunnelwand aufweist, wobei insbesondere die Tunnelwand eine gekrümmte Querschnittsform aufweist, wobei an oder in der zumindest einen insbesondere gekrümmten Tunnelwand eine Filtervorrichtung (10) nach einem der Ansprüche 1 bis 13 angeordnet ist.

17. Verwendung einer Filtervorrichtung (10) nach einem der Ansprüche 1 bis 13 zur Umgebungsluftfiltration in einem Tunnel, insbesondere in einem Tunnel nach Anspruch 16.

## Claims

1. Filter apparatus (10), in particular for stationary ambient air purification, having a blower housing (1) featuring at least one air inlet (11) and at least one air outlet (12), wherein at least one apparatus for generating an air flow (4) is disposed in the blower housing (1), said apparatus being capable of generating an air flow from the air inlet (11) to the air outlet (12), **characterized in that** the filter apparatus (10) features at least one flexible air guiding hose (2), wherein the air guiding hose (2) has a first open end (21) connected to the air outlet (12) of the blower housing (1), and a second closed end (22), wherein at least one opening (23), at which at least one filter element (3) is disposed, is present in the air guiding hose (2) between the first (21) and the second end (22), wherein the filter element (3) separates a raw side (RS) within the air guiding hose (2) from a clean side (CS) present downstream of the filter element (3), wherein the air guiding hose (2) is inflatable in an operating state by means of the apparatus for generating the air flow (4) and features a lower air permeability than the at least one filter element (3).

2. Filter apparatus (10) according to claim 1, **characterized in that** the air guiding hose (2) is not air-permeable, wherein the air guiding hose (2) in particular features or consists of a material that is not air-permeable.

3. Filter apparatus (10) according to claim 1 or 2, **characterized in that** an inner cross-sectional area (A₁-Aₙ) of the air guiding hose (2) decreases from the first (21) to the second end (22).

4. Filter apparatus (10) according to claim 1 to 3, **characterized in that** the at least one filter element (3) is fluid-tightly connected, in particular welded, glued or pressed, to a peripheral area of the air guiding hose (2) surrounding the opening (23).

5. Filter apparatus (10) according to one of the preceding claims, **characterized in that** at least two openings (23), preferably at least three openings (23) are present in the air guiding hose (2) and to which of each is disposed a filter element (3), wherein preferably the openings (23) are spaced apart from each other in the longitudinal direction of the air guiding hose (2) and/or disposed opposite each other.

6. Filter apparatus (10) according to one of the preceding claims, **characterized in that** the filter apparatus (10) features a support device (5) supporting the air guiding hose (2) at least partially along its longitudinal extension.

7. Filter apparatus (10) according to claim 6, **characterized in that** the support device (5) features an inner support frame extending inside the air guiding hose (2) and being connected to the blower housing (1) at least in the area of the first end (21) of the air guiding hose (2).

8. Filter apparatus (10) according to claim 6 or 7, **characterized in that** the support device (5) features an outer support frame (5) extending outside the air guiding hose (2) and surrounding it, wherein the air guiding hose (2) is preferably attached at least at its second end (22) to the outer support frame (5), particularly preferably using a rope or wire.

9. Filter apparatus (10) according to one of the preceding claims, **characterized in that** the at least one filter element (3) features at least one filter bellows made of a filter medium, wherein preferably the filter medium features at least one adsorbent, in particular one activated carbon and/or zeolite, and wherein preferably the filter element (3) features a polygonal, in particular cuboidshaped form.

10. Filter apparatus (10) according to one of the preceding claims, **characterized in that** the blower housing (1) features at least two air outlets (12), wherein one air guiding hose (2) is connected to each of the air outlets (12), wherein preferably the air outlets (12) are present on sides of the blower housing (1) facing away from one another.

11. Filter apparatus (10) according to one of the preceding claims, **characterized in that** the air guiding hose (2) is connected to the at least one air outlet port (12) of the blower housing (1) using a releasable hose interface.

12. Filter apparatus (10) according to claim 11, **characterized in that** the hose interface features a first interface part on the blower housing (1) and a second interface part on the first end (21) of the air guiding hose (2), wherein preferably the hose interface features at least one threaded and/or bayonet connection element, which particularly preferably features a predetermined key-lock coding.

13. Filter apparatus (10) according to one of the preceding claims, **characterized in that** the air guiding hose (2) features at least one inner flow guiding structure (24), preferably consisting of the single-layer or multi-layer fabric and/or film material, wherein at least two compartments partially closed off from one another on the inside are formed inside the air guiding hose (2) at least preferably by the at least one inner flow guiding structure (24).

14. Air guiding hose (2) having at least one filter element (3) for a filter apparatus (10) according to one of the preceding claims, wherein the air guiding hose (2) is designed to be flexible and has a first open end (21) connectable to the air outlet (12) of the blower housing (1) of the filter apparatus (1) and features a second closed end (22), wherein at least one opening (23), at which at least one filter element (3) is disposed, is present in the air guiding hose (2) between the first (21) and the second end (22), wherein the filter element (3) separates a raw side (RS) inside the air guiding hose (2) from a clean side (CS) present downstream of the filter element (3), wherein the air guiding hose (2) is inflatable in an operating state using the apparatus for generating the air flow (4) and wherein the air guiding hose (2) features a lower air permeability than the at least one filter element (3).

15. Air guiding hose (2) according to claim 14, **characterized in that** the air guiding hose (2) features on the second end an interface part of a hose interface, preferably at least one threaded and/or bayonet connection element, which particularly preferably features a predetermined key-lock coding.

16. Tunnel, in particular vehicle tunnel, in particular rail vehicle tunnel, or passenger tunnel featuring a tunnel floor, a tunnel ceiling and at least one tunnel wall, wherein in particular the tunnel wall features a curved cross-sectional shape, wherein a filter apparatus (10) according to one of the claims 1 to 13 is disposed on or in the at least one in particular curved tunnel wall.

17. Use of a filter apparatus (10) according to one of the claims 1 to 13 for ambient air purification in a tunnel, in particular in a tunnel according to claim 16.

## Revendications

1. Dispositif de filtration (10), notamment pour la filtration stationnaire de l'air ambient, ayant un boîtier de la soufflante (1) présentant au moins une entrée d'air (11) et au moins une sortie d'air (12), au moins un dispositif servant à générer un flux d'air (4) étant disposé dans le boîtier de la soufflante (1) et permettant de générer un flux d'air depuis l'entrée d'air (11) vers la sortie d'air (12), **caractérisé en ce que** le dispositif de filtration (10) présente au moins un tuyau de guidage d'air (2) flexible, le tuyau de guidage d'air (2) ayant une première extrémité ouverte (21) raccordée à la sortie d'air (12) du boîtier de la soufflante (1) et une seconde extrémité fermée (22), au moins une ouverture (23) se trouvant dans le tuyau de guidage d'air (2) entre la première (21) et la seconde extrémité (22), sur laquelle est disposé au moins un élément filtrant (3), l'élément filtrant (3) séparant un côté brut (RS) à l'intérieur du tuyau de guidage d'air (2) d'un côté pur (CS) se trouvant en aval de l'élément filtrant (3), le tuyau de guidage d'air (2) étant gonflable dans un état opérationnel au moyen du dispositif de génération du flux d'air (4) et présentant une perméabilité à l'air inférieure à celle de l'élément filtrant (3), au moins au nombre d'un.

2. Dispositif de filtration (10) selon la revendication 1, **caractérisé en ce que** le tuyau de guidage d'air (2) n'est pas perméable à l'air, le tuyau de guidage d'air (2) présentant notamment un matériau non perméable à l'air ou étant constitué d'un tel matériau.

3. Dispositif de filtration (10) selon la revendication 1 ou 2, **caractérisé en ce qu'**une surface de section transversale interne (A₁-Aₙ) du tuyau de guidage d'air (2) diminue de la première (21) à la seconde extrémité (22).

4. Dispositif de filtration (10) selon les revendications 1 à 3, **caractérisé en ce que** l'élément filtrant (3), au moins au nombre d'un, est raccordé de manière étanche aux fluides à une zone périphérique du tuyau de guidage d'air (2) entourant l'ouverture (23), notamment par soudage, collage et/ou compression.

5. Dispositif de filtration (10) selon l'une quelconque des revendications précédentes, **caractérisé en ce que** dans le tuyau de guidage d'air (2) se trouvent au moins deux ouvertures (23), de préférence au moins trois ouvertures (23), sur chacune desquelles est disposé un élément filtrant (3), de préférence les ouvertures (23) étant espacées dans une direction longitudinale du tuyau de guidage d'air (2) et/ou étant disposées en face les unes des autres.

6. Dispositif de filtration (10) selon l'une quelconque des revendications précédentes, **caractérisé en ce que** le dispositif de filtration (10) présente un dispositif de support (5) qui supporte le tuyau de guidage d'air (2) au moins partiellement le long de son extension longitudinale.

7. Dispositif de filtration (10) selon la revendication 6, **caractérisé en ce que** le dispositif de support (5) présente un cadre de support interne qui s'étend à l'intérieur du tuyau de guidage d'air (2) et qui est raccordé au boîtier de la soufflante (1) au moins au niveau de la première extrémité (21) du tuyau de guidage d'air (2).

8. Dispositif de filtration (10) selon la revendication 6 ou 7, **caractérisé en ce que** le dispositif de support (5) présente un cadre de support extérieur (5) qui s'étend à l'extérieur du tuyau de guidage d'air (2) et entoure celui-ci, le tuyau de guidage d'air (2) étant de préférence fixé au moins à sa seconde extrémité (22) au cadre de support extérieur (5), de façon particulièrement préférée au moyen d'un câble ou d'un fil métallique.

9. Dispositif de filtration (10) selon l'une quelconque des revendications précédentes, **caractérisé en ce que** l'élément filtrant (3), au moins au nombre d'un, présente au moins un soufflet de filtre d'un milieu filtrant, de préférence, le milieu filtrant présentant au moins un adsorbant, notamment un charbon actif et/ou une zéolithe, et de préférence, l'élément filtrant (3) présentant une forme polygonale, notamment parallélépipédique.

10. Dispositif de filtration (10) selon l'une quelconque des revendications précédentes, **caractérisé en ce que** le boîtier de la soufflante (1) présente au moins deux sorties d'air (12), un tuyau de guidage d'air (2) étant respectivement connecté aux sorties d'air (12), les sorties d'air (12) se trouvant de préférence sur des côtés opposés du boîtier de la soufflante (1).

11. Dispositif de filtration (10) selon l'une quelconque des revendications précédentes, **caractérisé en ce que** le tuyau de guidage d'air (2) est raccordé à l'ouverture de sortie d'air (12), au moins au nombre d'une, du boîtier de la soufflante (1) par une interface de tuyau détachable.

12. Dispositif de filtration (10) selon la revendication 11, **caractérisé en ce que** l'interface de tuyau présente une première partie d'interface sur le boîtier de la soufflante (1) et une seconde partie d'interface sur la première extrémité (21) du tuyau de guidage d'air (2), de préférence, l'interface de tuyau présentant au moins un élément de connexion fileté et/ou à baïonnette, qui présente de façon particulièrement préférée un codage clé-serrure prédéterminé.

13. Dispositif de filtration (10) selon l'une quelconque des revendications précédentes, **caractérisé en ce que** le tuyau de guidage d'air (2) présente au moins une structure de guidage d'écoulement intérieure (24), qui est de préférence constituée du matériau en tissu à une ou plusieurs couches et/ou en film, de façon particulièrement préférée, la structure de guidage d'écoulement intérieure (24), au moins au nombre d'une, forme au moins deux compartiments partiellement fermés l'un par rapport à l'autre du côté intérieur à l'intérieur du tuyau de guidage d'air (2).

14. Tuyau de guidage d'air (2) ayant au moins un élément filtrant (3) pour un dispositif de filtration (10) selon l'une quelconque des revendications précédentes, le tuyau de guidage d'air (2) étant conçu souple et présentant une première extrémité ouverte (21) pouvant être reliée à la sortie d'air (12) du boîtier de la soufflante (1) du dispositif de filtration (1), et une seconde extrémité fermée (22), au moins une ouverture (23) se trouvant dans le tuyau de guidage d'air (2) entre la première (21) et la seconde extrémité (22), sur laquelle est disposé au moins un élément filtrant (3), l'élément filtrant (3) séparant un côté brut (RS) à l'intérieur du tuyau de guidage d'air (2) d'un côté pur (CS) se trouvant en aval de l'élément filtrant (3), le tuyau de guidage d'air (2) étant gonflable dans un état opérationnel au moyen du dispositif de génération du flux d'air (4) et le tuyau de guidage d'air (2) présentant une perméabilité à l'air inférieure à celle de l'élément filtrant (3), au moins au nombre d'un.

15. Tuyau de guidage d'air (2) selon la revendication 14, **caractérisé en ce que** le tuyau de guidage d'air (2) présente à la seconde extrémité une partie d'interface d'une interface de tuyau, de préférence au moins un élément de connexion fileté et/ou à baïonnette, qui présente de façon particulièrement préférée un codage clé-serrure prédéterminé.

16. Tunnel, en particulier tunnel pour véhicules, en particulier tunnel pour véhicules sur rails, ou tunnel pour personnes, qui présente un fond de tunnel, un plafond de tunnel et au moins une paroi de tunnel, notamment la paroi de tunnel présentant une forme de section transversale courbe, un dispositif de filtration (10) selon l'une quelconque des revendications 1 à 13 étant disposé sur ou dans la paroi de tunnel, au moins au nombre d'une, notamment courbe.

17. Utilisation d'un dispositif de filtration (10) selon l'une quelconque des revendications 1 à 13 pour la filtration de l'air ambiant dans un tunnel, notamment dans un tunnel selon la revendication 16.
